# EUROPEAN PATENT SPECIFICATION

(11) **EP 3 121 921 B1**
(45) Date of publication and mention of the grant of the patent: **20.03.2019**
(21) Application number: 15766034.1
(22) Date of filing: 20.03.2015
(51) Int. Cl.: G01R 31/02, H02H 3/33, H02H 3/347, H02H 1/00

(54) **RESIDUAL CURRENT PROTECTION DEVICE**
FEHLERSTROMSCHUTZVORRICHTUNG
DISPOSITIF DE PROTECTION CONTRE LE COURANT RÉSIDUEL

(30) Priority: 21.03.2014 CN 201410108242
(43) Date of publication of application: 25.01.2017
(73) Proprietor: Seari Electric Technology Co., Ltd., Shanghai 200063 (CN); Zhejiang Chint Electrics Co., Ltd., Yueqing, Zhejiang 325603 (CN)
(72) Inventor: CHEN, Yongliang, Shanghai 200063 (CN); XU, Lei, Shanghai 200063 (CN); CHEN, Lijun, Shanghai 200063 (CN); YANG, Shijiang, Shanghai 200063 (CN)
(74) Representative: Osha Liang
(86) International application number: PCT/CN2015/074669
(87) International publication number: WO 2015/139655

(56) References cited:
- EP-A1- 0 349 880
- WO-A1-2013/128803
- CN-A- 1 712 973
- CN-A- 101 208 845
- CN-A- 101 217 232
- CN-A- 104 111 366
- DE-A1- 3 823 101
- DE-A1- 19 943 801
- GB-A- 1 485 968
- US-B1- 6 437 954
- US-B1- 6 658 360

## Description

### BACKGROUND OF THE INVENTION

### 1. Field of the Invention

The present invention relates to current protection apparatus, more particularly, relates to a residual current protection apparatus which is sensitive to full current.

### 2. The Related Art

Current protection by monitoring a residual current is an important protection measure for electrical lines. In prior art, an excitation circuit is used to generate a high frequency current in a magnetic core and then to generate a high frequency magnetic field. When a low frequency current or a DC current exists in a primary winding, saturation of a magnetic circuit will change and the high frequency magnetic field will deviate, so that the low frequency or DC current may be detected.

CN1387213A, entitled "test mutual inductor for protecting device against electric ground leakage and protecting device against electric ground leakage" discloses a toroidal iron core current detection transformer against electric ground leakage. The protecting device against electric ground leakage is sensitive to AC, DC or periodic ground leakage fault current. The protecting device comprises: an excitation circuit connected to at least one secondary winding of a detection transformer, the excitation circuit applying an excitation signal; a processing circuit connected to the secondary winding; a power supply circuit connected to the excitation circuit and the processing circuit; a detection transformer. The protecting device further comprises a magnetic circuit composed of iron based magnetic material. The magnetic material has crystals which do not exceed 100 nanometers in thickness and has a static or low frequency magnetic cycle which is virtually rectangular, and the coercive force in the magnetic cycle is less than 3 Amperes/meter. CN1387213A uses a triangle wave as an excitation current. Presence of a DC component will make a saturation point shift. A DC fault current is detected by measuring a saturation moment. CN1387213A requires complex circuits such as a integral circuit or a saturation detection module, which will increase cost and complexity of the circuit.

CN1712973, entitled "device for reading of direct and/or alternating currents" discloses a device for detection of direct and/or alternating current. The device is used in the realisation of highly sensitive amperometric measuring instruments or for the detection of differential faults along with automatic switches. The device comprises a magnetic core disposed in such a manner to surround at least one current-carrying conductor. A winding surrounds the magnetic core and is electrically connected to an electrical resistance. A voltage source generates a drive voltage (Vexcit) which permits the circulation of a pick-up current (Iexcit) in the winding and in the core. Amplification means are used to detect the voltage (Vsense) at the terminals of the resistance in order to generate a first signal (Vampl) which is representative of the above defined current (lexcit). The device also comprises a feedback adjustment circuit block which acquires the first input signal (Vampl) in order to generate a second signal which inverts the drive voltage (Vexcit) when the pick-up current (Iexcit) reaches preset values. CN1712973 utilizes an excitation current with a fixed frequency, a detection accuracy of CN1712973 is restricted by Ampere turns ratio of both the primary and secondary windings.

US 4,276,510 discloses an apparatus for sensing the primary current of a current transformer. A secondary winding of a current transformer is driven by a high frequency AC source to excite the core to alternating. An inductance sensor alternately senses the secondary winding inductances. Any difference in these inductances is a function of low frequency primary current and is utilized to develop a current flowing through a tertiary core winding to equalize these inductances. This tertiary winding current thus becomes a precise measure of the primary current. US 4,276,510 varies an inductance (magnetic permeability), saturation in advance shall be avoided, and unsaturation under a fault current shall also be avoided (unless the fault current is too small). A reversion shall occur before complete saturation, a reversion period is determined by resistance values of resistors R1, R2, R3 and turn-on voltages of transistors. US 4,276,510 uses a tertiary core winding and complex analog circuits, which will greatly increase difficulty and cost of implementation, and will influence the accuracy of detection.

US 6 658 360 B1 describes a fault current detection system which detects a fault current generated on a conductive path supplying power to an electric device and prevents the fault current from being supplied to the electric device.

Further fault current detection systems are described in GB 1 485 968 A, EP 0 349 880 A and WO 2013/128803 A1.

In summary, excitation circuits in prior art require very high electric power and has a complex structure, which will increase cost of the circuit and the power consumption. Further, a complex excitation circuit is not suitable for mall dimension designs and electromagnetic compatibility considerations.

### SUMMARY

The present invention discloses a residual current protection apparatus which is simple in structure and easy to realize, but is sensitive to full current.

According to an embodiment of the present invention, a residual current protection apparatus is disclosed. The residual current protection apparatus comprises: a first detection magnetic core, a second detection magnetic core, a first fault current detection circuit, a second fault current detection circuit, a drive circuit and a bipolar power supply module. The first detection magnetic core bears around a conduct wire of a main loop. The first detection magnetic core is a full current detection magnetic core and comprises a primary winding composed of current carrying conductors and a second winding. The second detection magnetic core bears around the conduct wire of the main loop. The second detection magnetic core is an electromagnetic current transformer and comprises a primary winding and a second winding. The first fault current detection circuit is coupled with the first detection magnetic core. The first fault current detection circuit comprises a signal sampling circuit coupled with the second winding of the first detection magnetic core, a processing circuit and a comparing circuit. The signal sampling circuit comprises an oscillation auxiliary circuit and a low pass filter circuit. The first fault current detection circuit is dependent on a grid voltage. The first fault current detection circuit conducts full current sampling on the main loop, so as to detect a high-frequency AC fault residual current, a pulsant DC residual current and a smooth DC residual current. The second fault current detection circuit is coupled with the second winding of the second detection magnetic core. The second fault current detection circuit is independent of the grid voltage. The second fault current detection circuit conducts electromagnetic current sampling on the main loop, so as to detect a power-frequency AC residual current and a pulsant DC residual current. An input of the drive circuit is connected to the first fault current detection circuit and the second fault current detection circuit, and an output of the drive circuit is connected to an executing mechanism to trigger the executing mechanism to operate. The bipolar power supply module is connected to the main loop and the first fault current detection circuit. The oscillation auxiliary circuit and the first detection magnetic core form a RL multivibration circuit, the bipolar power supply module excites the RL multivibration circuit so that the RL multivibration circuit performs coupling modulation for a residual current and a carrier. The low pass filter circuit receives an output of the RL multivibration circuit, performs decoupling for the residual current and the carrier, filters the carrier and outputs a sampled wave form of the residual current. The second fault current detection circuit directly obtains energy via the second detection magnetic core in an electromagnetic mode, and the second fault current detection circuit discriminates a residual current based on the obtained energy and outputs a second fault circuit signal.

According to an embodiment, the signal sampling circuit is coupled with the first detection magnetic core to form a magnetic modulation and demodulation circuit which conducts full current sampling on the main loop, the signal sampling circuit outputs a sampling waveform. The processing circuit is connected to the signal sampling circuit, the processing circuit amplifies and reversely flips the sampling waveform. The comparing circuit receives an output of the processing circuit, the comparing circuit discriminates the output of the processing circuit and outputs a first fault circuit signal.

According to an embodiment, the bipolar power supply module decreases the grid voltage by a switching power supply and forms a positive-negative bipolar power supply output via a self-feedback balance circuit. The positive-negative bipolar power supply output works as a working power supply of the first fault current detection circuit. The signal sampling circuit, the processing circuit and the comparing circuit of the first fault current detection circuit are driven by the bipolar power supply module.

According to an embodiment, the oscillation auxiliary circuit and the low pass filter circuit are provided with an amplifier respectively, a cutoff frequency of the low pass filter circuit is 2kHz.

According to an embodiment, the processing circuit comprises an amplifying circuit and an absolute value circuit, which amplify and reversely flip the sampling waveform of the residual current.

According to an embodiment, the comparing circuit comprises an amplifier, the comparing circuit compares an signal output by the processing circuit with a predetermined threshold, and outputs the first fault circuit signal.

According to an embodiment, the drive circuit comprises an operational amplifier, a power-down error compensation circuit and a diode. A positive input of the operational amplifier is connected to the first fault current detection circuit, a negative input of the operational amplifier is connected to the power-down error compensation circuit. The second fault current detection circuit is connected to a positive end of the diode. A negative end of the diode is connected to an output of operational amplifier and acts as an output of the drive circuit.

According to an embodiment, the executing mechanism operates when the drive circuit outputs a signal.

The residual current protection apparatus of the present invention is sensitive to full current. The residual current protection apparatus has two detection circuits, the two detection circuits will not interfere with each other and no conversion circuit is required therebetween. The residual current protection apparatus has a simple structure and is easy to realize. The residual current protection apparatus can work in a low consumption condition, and can avoid an error action of a release due to an error signal cause by power-down of a sampling circuit.

### BRIEF DESCRIPTION OF THE DRAWINGS

The above and other features, natures, and advantages of the invention will be apparent by the following description of the embodiments incorporating the drawings, wherein,
FIG. 1 illustrates a schematic diagram of an electrical structure of a residual current protection apparatus according to an embodiment of the present invention.
FIG. 2 illustrates a circuit diagram of a signal sampling circuit of a residual current protection apparatus according to an embodiment of the present invention.
FIG. 3 illustrates a sampling waveform of the signal sampling circuit of FIG. 2.
FIG. 4 illustrates a circuit diagram of a drive circuit a residual current protection apparatus according to an embodiment of the present invention.
FIG. 5 illustrates an output waveform of the drive circuit of FIG. 4.

### DETAILED DESCRIPTION OF EMBODIMENTS

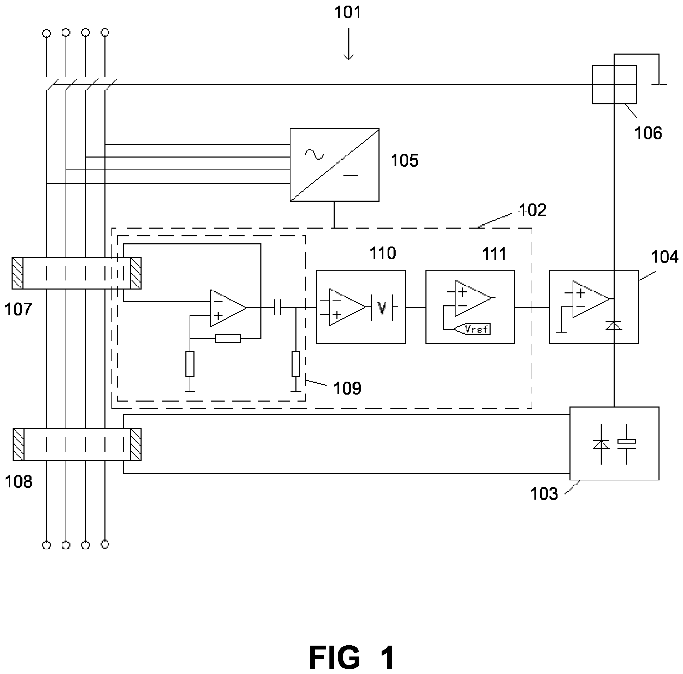

As shown in FIG. 1, the present invention discloses a residual current protection apparatus. FIG. 1 illustrates a schematic diagram of an electrical structure of the residual current protection apparatus. The residual current protection apparatus comprises a first detection magnetic core 107, a second detection magnetic core 108, a first fault current detection circuit 102, a second fault current detection circuit 103, a drive circuit 104 and a bipolar power supply module 105.

The first detection magnetic core 107 bears around a conduct wire of a main loop. The first fault current detection circuit 102 is coupled with the first detection magnetic core 107. The first fault current detection circuit 102 is dependent on a grid voltage, the first fault current detection circuit 102 conducts full current sampling on the main loop, so as to detect a high-frequency AC fault residual current, a pulsant DC residual current and a smooth DC residual current.

The second detection magnetic core 108 also bears around the conduct wire of the main loop. The second fault current detection circuit is coupled with the second detection magnetic core 108. The second fault current detection circuit 103 is independent of the grid voltage. The second fault current detection circuit 103 conducts electromagnetic current sampling on the main loop, so as to detect a power-frequency AC residual current and a pulsant DC residual current.

An input of the drive circuit 104 is connected to the first fault current detection circuit 102 and the second fault current detection circuit 103, and an output of the drive circuit 104 is connected to an executing mechanism 106 to trigger the executing mechanism 106 to operate.

The bipolar power supply module 105 is connected to the main loop and the first fault current detection circuit 102. The bipolar power supply module 105 decreases the grid voltage with a switching power supply and forms a positive-negative bipolar power supply output via a self-feedback balance circuit. The positive-negative bipolar power supply output acts as a working power supply of the first fault current detection circuit 102.

Then, the present invention provides a residual current protection apparatus which is sensitive to full current. The first fault current detection circuit 102 of the residual current protection apparatus is dependent on a grid voltage. Via a full current transformer, the first fault current detection circuit 102 is able to detect an AC fault residual current, a pulsant DC residual current and a smooth DC residual current with a frequency under 1KHz. The second fault current detection circuit 103 of the residual current protection apparatus is independent of the grid voltage. Via an electromagnetic current transformer, the second fault current detection circuit 103 is able to detect a power-frequency AC residual current and a pulsant DC residual current. The first fault current detection circuit 102 and the second fault current detection circuit 103 are integrated via the drive circuit 104. The drive circuit 104 triggers the executing mechanism 106 to operate. The first fault current detection circuit 102 and the second fault current detection circuit 103 are coupled with the first detection magnetic core and the second detection magnetic core respectively. The first detection magnetic core is a full current detection magnetic core. A primary winding of the first detection magnetic core is composed of current carrying conductors, a second winding of the first detection magnetic core is coupled with the sampling circuit 109. The second detection magnetic core is an electromagnetic current transformer, a second winding of the second detection magnetic core is coupled with the second fault current detection circuit.

The first fault current detection circuit 102 comprises a signal sampling circuit 109, a processing circuit 110 and a comparing circuit 111. The signal sampling circuit 109 is coupled with the first detection magnetic core 107 to form a magnetic modulation and demodulation circuit which conducts full current sampling on the main loop. The signal sampling circuit 109 outputs a sampling waveform. The processing circuit 110 is connected to the signal sampling circuit 109. The processing circuit 110 amplifies and reversely flips the sampling waveform. The comparing circuit 111 receives an output of the processing circuit 110. The comparing circuit 111 discriminates the output of the processing circuit 110 and outputs a first fault circuit signal. The signal sampling circuit 109, the processing circuit 110 and the comparing circuit 111 of the first fault current detection circuit 102 are driven by the bipolar power supply module 105.

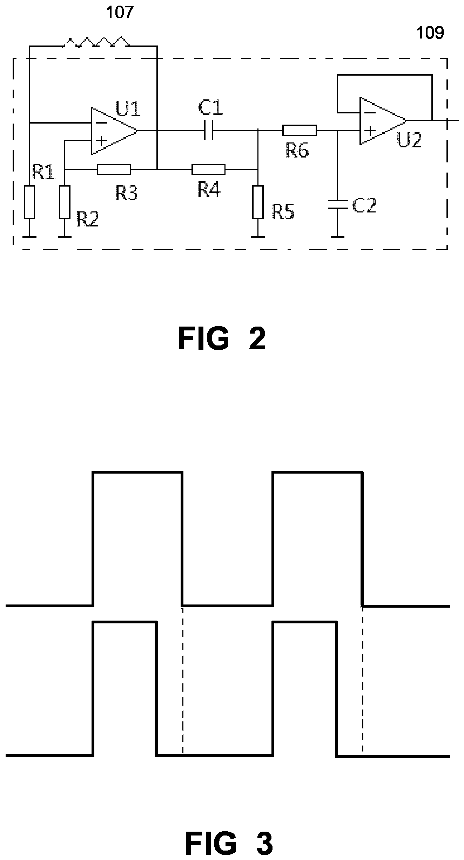

As shown in FIG. 2, FIG. 2 illustrates a circuit diagram of the signal sampling circuit. The signal sampling circuit 109 comprises an oscillation auxiliary circuit and a low pass filter circuit. The oscillation auxiliary circuit and the first detection magnetic core 107 are coupled to form a RL multivibration circuit. The bipolar power supply module 105 excites the RL multivibration circuit so that the RL multivibration circuit performs coupling modulation for a residual current and a carrier. The low pass filter circuit receives an output of the RL multivibration circuit, performs decoupling for the residual current and the carrier, filters the carrier and outputs a sampled wave form of the residual current. The oscillation auxiliary circuit and the low pass filter circuit are provided with an amplifier respectively, a cutoff frequency of the low pass filter circuit is 2kHz. The processing circuit 110 comprises an amplifying circuit and an absolute value circuit, which amplify and reversely flip the sampling waveform of the residual current. The comparing circuit 111 comprises an amplifier, compares an signal output by the processing circuit 110 with a predetermined threshold, and outputs the first fault circuit signal. The first fault current detection circuit 102 of the present invention may realize all of the functions with four operational amplifiers, of which the cost is low and the consumption is small. Forming a RL multivibration circuit with the signal sampling circuit 109 and the first detection magnetic core 107 may simplify the circuit structure. A fault current signal of a fault current, including an AC residual current, a pulsant DC residual current and a smooth DC residual current, may be sampled via the signal sampling circuit by coupling the fault current with a high-frequency excitation current. For detecting an AC residual current with a frequency lower than 1KHz, it is required that a frequency of an excitation current is much higher than the frequency of the fault current. The frequency of the excitation current shall be at least 5 times higher than the frequency of the modulated wave (the fault current), and 10 times higher is preferred. The fault current coupled with the high-frequency excitation current may be decoupled through a low pass filter by filtering the high-frequency excitation current. The fault current (the residual current) may be restored and converted to a voltage signal which is treatable by a back-end apparatus. The processing circuit 110 amplifies the voltage signal and filters signal pulse spikes. The voltage signal is then rectified to a positive voltage signal by the absolute value circuit and is input to the comparing circuit 111. Continue with FIG. 2, the first detection magnetic core 107 is connected to an anti-phase input and an output of an operational amplifier U1. A resistor R1 and a resistor R2 connect an anti-phase input and the in-phase input of the operational amplifier U1 to ground, respectively. A resistor R3 connects the in-phase input and the output of the operational amplifier U1 as a positive feedback. Then the RL multivibration circuit is formed. The RL multivibration circuit may reflect a variation of a magnetic field around the first detection magnetic core 107 as a variation of duty ratio of an output square wave. The operational amplifier U1 and auxiliary components form the oscillation auxiliary circuit. An output of the RL multivibration circuit is connected to a capacitor C1 and a resistor R4, and then connected to a resistor R5 and a resistor R6 respectively. The resistor R5 is connected to ground. The resistor R6 is connected to an operational amplifier U2 and a capacitor C2, respectively. One end of the capacitor C2 is connected to ground. The operational amplifier U2 and auxiliary components form a low pass filtering and demodulation circuit, which converts a variation of duty ratio to be a variation of voltage. FIG. 3 illustrates a sampling waveform of the signal sampling circuit of FIG. 2. An upper waveform shown in FIG. 3 is a waveform when no residual current exists in the main loop, and a lower waveform shown in FIG. 3 is a waveform when residual current exists in the main loop. As shown in FIG. 3, when residual current exists in the main loop, a boundary of a square wave output by the RL multivibration circuit does not change (that is, a period of the square wave does not change), but a separation line of the duty ratio therein shifts, which means the duty ratio changes.

The first detection magnetic core 107 is a full current detection magnetic core. A primary winding of the first detection magnetic core 107 is composed of current carrying conductors A second winding of the first detection magnetic core 107 is coupled to the signal sampling circuit 109. The first detection magnetic core 107 and the signal sampling circuit 109 form the RL multivibration circuit. The second winding of the first detection magnetic core acts as an inductor of the RL multivibration circuit. Since a current in an inductor will not change abruptly, the current will attenuate in the inductor. The voltage output by the processing circuit is compared with a reference voltage of the in-phase input of the operational amplifier, the output voltage flips when it is less than the reference voltage. The RL multivibration circuit generates a self-excited oscillation and applies a high frequency carrier current signal to the secondary winding. When the main loop fails, a fault current is modulated by the carrier current signal. However, it requires that the frequency of the carrier current signal is much higher than the frequency of the modulated wave (the fault current). The frequency of the carrier current signal shall be at least 5 times higher than the frequency of the modulated wave (the fault current), and 10 times higher is preferred. According to an embodiment, the frequency of the carrier current signal is 8KHz, which can be used to detect an AC residual current, a pulsant DC residual current and a smooth DC residual current with a frequency lower than 1KHz. The RL multivibration circuit of the signal sampling circuit 109 is connected to the low pass filter circuit. The coupled fault current signal and carrier current signal decouple in the low pass filter circuit. A cutoff frequency of the low pass filter circuit is 2kHz, then the carrier current signal is filtered. The sampled signal (the fault current signal) is then connected to the processing circuit 110. A half wave rectifier circuit is loaded on an anti-phase amplifier to form a full wave rectifier circuit. The circuit shall meet a predetermined requirement so that each peak of the output voltage has a same height. The decoupled fault current signal is connected to the comparing circuit 111. When the fault current signal (represented by a voltage) is greater than a threshold voltage of an anti-phase input of the comparing circuit 111, the comparing circuit 111 outputs a positive voltage signal. The positive voltage signal is provided to the drive circuit 104 to drive the executing mechanism 106, the executing mechanism 106 disconnects a switch of a grid.

The second fault current detection circuit 103 is coupled with the second detection magnetic core 108. The second detection magnetic core 108 is an electromagnetic current transformer. A second winding of the second detection magnetic core 108 is coupled with the second fault current detection circuit 103. The second fault current detection circuit 103 directly obtains energy via the second detection magnetic core 108 in an electromagnetic mode. The second fault current detection circuit 103 discriminates a residual current based on the obtained energy and outputs a second fault circuit signal. The first fault current detection circuit 102 and the second fault current detection circuit 103 may work together and will not interfere with each other. No complex conversion circuit is required and the detection circuits are easy to realize. The first fault current detection circuit 102 is connected to a diode and a voltage divider resistor, so that the output signal of the first fault current detection circuit 102 will not interfere with the elements of the second fault current detection circuit 103.

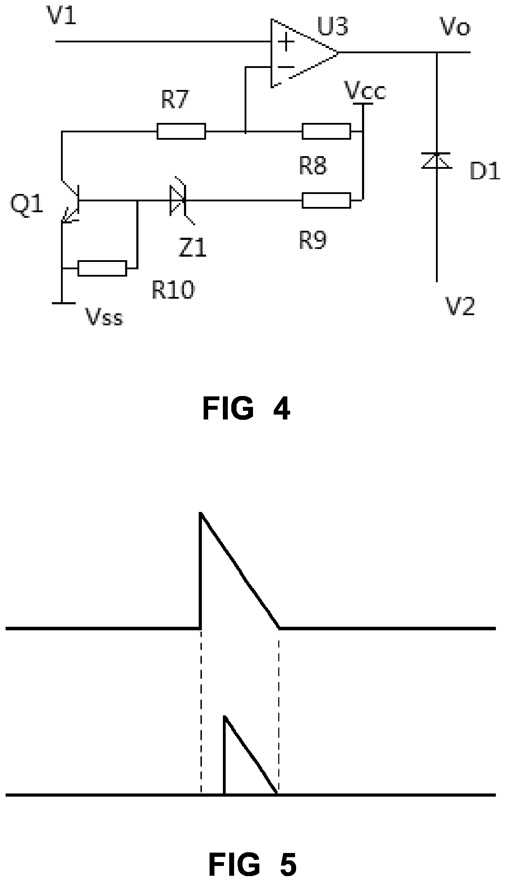

The drive circuit 104 comprises an operational amplifier, a power-down error compensation circuit and a diode. A positive input of the operational amplifier is connected to the first fault current detection circuit 102, and a negative input of the operational amplifier is connected to the power-down error compensation circuit. The second fault current detection circuit 103 is connected to a positive end of the diode, a negative end of the diode is connected to an output of operational amplifier and acts as an output of the drive circuit 104. A transistor in the RL multivibration circuit will generate an error signal when the transistor is switched off. The error signal will pass through the decoupling circuit, the filtering circuit, the absolute value circuit and the comparing circuit and couple to the output. The error signal may cause an error action of the executing mechanism. Therefore, a power-down error compensation circuit is provided in drive circuit 104. The power-down error compensation circuit comprises a transistor voltage stabilizing circuit. FIG. 4 illustrates a circuit diagram of a drive circuit in a residual current protection apparatus according to an embodiment of the present invention. An anti-phase input of an operational amplifier U3 is connected to the power-down error compensation circuit. The power-down error compensation circuit is composed of resistors R7, R8, R9 and R10, a stabilivolt Z1 and a transistor Q1. An in-phase input of the operational amplifier U3 is connected to an output signal V1 of the first fault current detection circuit 102. V2 is the output signal of the second fault current detection circuit 103. V2 is connected to an output of the operational amplifier U3 via a diode D1 and forms a drive signal Vo. When the power supply is power-down, the RL multivibration circuit will generate a power-down pulse signal which may cause an error action of the executing mechanism. At the same time, the transistor in the power-down error compensation circuit will generate a pulse signal which is strong enough. The pulse signal is connected to the anti-phase input of the comparing circuit to compensate the error signal. FIG. 5 illustrates an output waveform of the drive circuit of FIG. 4. As shown in FIG. 5, an upper waveform is a compensation pulse signal generated by the power-down error compensation circuit, and a lower waveform is a power-down error pulse signal. When the power supply is power-down, the power-down error compensation circuit will generate a pulse signal (compensation pulse signal), a rising edge of which is faster and higher than the power-down error pulse signal of the main loop.

The executing mechanism 106 operates when the drive circuit 104 outputs a signal.

A working process of the residual current protection apparatus of the present invention is as follows: a first detection magnetic core 107 bearing around a conduct wire of a main loop and a signal sampling circuit 109 of a second detection magnetic core 108 form the RL multivibration circuit which induces a fault current. The fault current is converted to be a sampling output signal by a low pass filter circuit in the signal sampling circuit 109. A back end of the signal sampling circuit 109 is connected to a processing circuit 110. The processing circuit 110 is composed of a negative feedback amplifying circuit and an absolute value circuit. The processing circuit 110 amplifies and reversely flips the sampling output signal received from front end to form a pretreated signal. A back end of the processing circuit 110 is connected to a comparing circuit 111. The comparing circuit 111 comprises an operational amplifier. The comparing circuit 111 compares the pretreated signal with a predetermined threshold and outputs a fault signal. The comparing circuit 111 is directly connected to a drive circuit 104. A second fault current detection circuit 103 utilizes an electromagnetic fault current detection. A second detection magnetic core 108 provides energy and signal to the second fault current detection circuit 103 directly. The second fault current detection circuit 103 is able to detect an AC residual current and a pulsant DC residual current. The second fault current detection circuit 103 is independent of the grid voltage, a fault signal output by the second fault current detection circuit 103 is connected to the drive circuit 104. The drive circuit 104 comprises a compensation circuit and a dual-path protection circuit. The compensation circuit is used to prevent a power-down error of the RL multivibration circuit. The dual-path protection circuit is used to prevent interference between the first fault current detection circuit and the second fault current detection circuit. A back end of the drive circuit 104 is connected to an executing mechanism 106. The executing mechanism 106 triggers a mechanism to operate according to an output signal of the drive circuit 104. A bipolar power supply module 105 comprises a switching power supply. A grid power is introduced into the bipolar power supply module 105 and is converted to be a DC power supply that the first fault current detection circuit requires. The bipolar power supply module 105 also provides positive-negative current excitation to the RL multivibration circuit.

When a grid voltage exists, an electromagnetic detection circuit (the second detection magnetic core 108 and the second fault current detection circuit 103) and an electronic detection circuit (the first detection magnetic core 107 and the first fault current detection circuit 102) work together. If a residual current is a grid-frequency AC residual current or a grid-frequency pulsant DC residual current, both detection circuits will output fault signals, and the fault signals will drive the executing mechanism 106 via the drive circuit 104. The fault signals output by different detection circuits will not interfere with each other. If a residual current is a smooth DS residual current or a high-frequency residual current, only the first fault current detection circuit 102 will output a fault signal and the fault signal will drive the executing mechanism 106 via the drive circuit 104. The fault signal will not affect a polar capacitor in the second fault current detection circuit 103 due to the existence of a reverse diode and a voltage divider resistor. Meanwhile, an input of the second fault current detection circuit 103 is weak enough, so the second fault current detection circuit 103 will not influence normal operation of the first fault current detection circuit 102, nor drive the executing mechanism 106 via the drive circuit 104.

When no grid voltage exists, the first fault current detection circuit 102 does not operate and will not interfere with other circuits, while the second fault current detection circuit 103 is able to detect a grid-frequency AC residual current or a grid-frequency pulsant DC residual current.

The residual current protection apparatus of the present invention is sensitive to full current. The residual current protection apparatus has two detection circuits, the two detection circuits will not interfere with each other and no conversion circuit is required therebetween. The residual current protection apparatus has a simple structure and is easy to realize. The residual current protection apparatus can operate in a low consumption condition, and can avoid an error action of a release due to an error signal cause by power-down of a sampling circuit.

The above embodiments are provided to those skilled in the art to realize or use the invention. Various modifications or changes may be made to these embodiments by those skilled in the art without departing from the scope of the invention, which is determined by the claims. Therefore, the protection scope of the invention is not limited by the above embodiments.

## Claims

1. A residual current protection apparatus comprising:
a first detection magnetic core (107) bearing around a conduct wire of a main loop, wherein the first detection magnetic core (107) is a full current detection magnetic core and comprises a primary winding composed of current carrying conductors and a second winding;
a second detection magnetic core (108) bearing around the conduct wire of the main loop, wherein the second detection magnetic core (108) is an electromagnetic current transformer and comprises a primary winding and a second winding;
a first fault current detection circuit (102) coupled with the first detection magnetic core (107) and comprising:
a signal sampling circuit (109) coupled with the second winding of the first detection magnetic core (107) and comprising an oscillation auxiliary circuit and a low pass filter circuit,
a processing circuit (110) and
a comparing circuit (111),
wherein the first fault current detection circuit (102) is dependent on a grid voltage, the first fault current detection circuit (102) conducts full current sampling on the main loop, so as to detect a high-frequency alternating current (AC) fault residual current, a pulsant direct current (DC) residual current and a smooth direct current (DC) residual current;
a second fault current detection circuit (103) coupled with the second winding of the second detection magnetic core (108), wherein the second fault current detection circuit (103) is independent of the grid voltage, the second fault current detection circuit (103) conducts electromagnetic current sampling on the main loop, so as to detect a power-frequency alternating current (AC) residual current and a pulsant direct current (DC) residual current;
a drive circuit (104), wherein an input of the drive circuit (104) is connected to the first fault current detection circuit (102) and the second fault current detection circuit (103), and an output of the drive circuit (104) is connected to an executing mechanism (106) to trigger the executing mechanism (106) to operate; and
a bipolar power supply module (105) connected to the main loop and the first fault current detection circuit (102),
wherein the oscillation auxiliary circuit and the first detection magnetic core (107) form a RL multivibration circuit, the bipolar power supply module (105) excites the RL multivibration circuit so that the RL multivibration circuit performs coupling modulation for a residual current and a carrier, the low pass filter circuit receives an output of the RL multivibration circuit, performs decoupling for the residual current and the carrier, filters the carrier and outputs a sampled wave form of the residual current, and
the second fault current detection circuit (103) directly obtains energy via the second detection magnetic core (108) in an electromagnetic mode, the second fault current detection circuit (103) discriminates a residual current based on the obtained energy and outputs a second fault circuit signal.

2. The residual current protection apparatus according to claim 1, wherein
the signal sampling circuit (109) is coupled with the first detection magnetic core (107) to form a magnetic modulation and demodulation circuit which conducts full current sampling on the main loop, the signal sampling circuit (109) outputs a sampling waveform;
the processing circuit (110) is connected to the signal sampling circuit (109), and amplifies and reversely flips the sampling waveform;
the comparing circuit (111) receives an output of the processing circuit (110), discriminates the output of the processing circuit (110) and outputs a first fault circuit signal.

3. The residual current protection apparatus according to claim 2, wherein the bipolar power supply module (105) decreases the grid voltage with a switching power supply and forms a positive-negative bipolar power supply output via a self-feedback balance circuit, the positive-negative bipolar power supply output works as a working power supply of the first fault current detection circuit (102);
the signal sampling circuit (109), the processing circuit (110) and the comparing circuit (111) of the first fault current detection circuit (102) are driven by the bipolar power supply module (105).

4. The residual current protection apparatus according to claim 1, wherein
the oscillation auxiliary circuit and the low pass filter circuit are provided with an amplifier respectively, a cutoff frequency of the low pass filter circuit is 2kHz.

5. The residual current protection apparatus according to claim 3, wherein
the processing circuit (110) comprises an amplifying circuit and an absolute value circuit, which amplify and reversely flip the sampling waveform of the residual current.

6. The residual current protection apparatus according to claim 3, wherein
the comparing circuit (111) comprises an amplifier, compares an signal output by the processing circuit (110) with a predetermined threshold, and outputs the first fault circuit signal.

7. The residual current protection apparatus according to claim 1, wherein the drive circuit (104) comprises an operational amplifier, a power-down error compensation circuit and a diode, a positive input of the operational amplifier is connected to the first fault current detection circuit (102), a negative input of the operational amplifier is connected to the power-down error compensation circuit, the second fault current detection circuit (103) is connected to a positive end of the diode, a negative end of the diode is connected to an output of operational amplifier and acts as an output of the drive circuit (104).

8. The residual current protection apparatus according to claim 1, wherein the executing mechanism (106) operates when the drive circuit (104) outputs a signal.

## Patentansprüche

1. Fehlerstromschutzvorrichtung, umfassend:
einen ersten magnetischen Detektionskern (107), der einen Leitungsdraht einer Hauptschleife umgibt, wobei der erste magnetische Detektionskern (107) ein magnetischer Allstromdetektionskern ist und eine aus stromdurchflossenen Leitern aufgebaute Primärwicklung und eine zweite Wicklung aufweist;
einen zweiten magnetischen Detektionskern (108), der einen Leitungsdraht der Hauptschleife umgibt, wobei der zweite magnetische Detektionskern (108) ein elektromagnetischer Stromwandler ist und eine Primärwicklung und eine Sekundärwicklung aufweist;
eine erste Fehlerstromdetektionsschaltung (102), die mit dem ersten magnetischen Detektionskern (107) verbunden ist und aufweist:
eine Signalerfassungsschaltung (109), die mit der zweiten Wicklung des ersten magnetischen Detektionskerns (107) gekoppelt ist und einen Hilfsschwingkreis und eine Tiefpassfilterschaltung umfasst,
eine Verarbeitungsschaltung (110) und
eine Komparatorschaltung (111),
wobei die erste Fehlerstromdetektionsschaltung (102) von einer Netzspannung abhängt, die erste Fehlerstromdetektionsschaltung (102) eine Allstromerfassung an der Hauptschleife ausführt, um einen hochfrequenten Fehlerwechselstrom, einen pulsierenden Fehlergleichstrom und einen glatten Fehlergleichstrom zu detektieren;
eine zweite Fehlerstromdetektionsschaltung (103), die mit der zweiten Wicklung des zweiten magnetischen Detektionskerns (108) gekoppelt ist, wobei die zweite Fehlerstromdetektionsschaltung (103) unabhängig von der Netzspannung ist und die zweite Fehlerstromdetektionsschaltung (103) eine elektromagnetische Stromerfassung an der Hauptschleife ausführt, um einen Netzfrequenz-Fehlerwechselstrom und einen pulsierenden Fehlergleichstrom zu erfassen;
eine Ansteuerschaltung (104), wobei ein Eingang der Ansteuerschaltung (104) mit der ersten Fehlerstromdetektionsschaltung (102) und der zweiten Fehlerstromdetektionsschaltung (103) verbunden ist und ein Ausgang der Treiberschaltung (104) mit einem Ausführungsmechanismus (106) verbunden ist, um ein Schalten des Ausführungsmechanismus (106) auszulösen; und
ein bipolares Stromversorgungsmodul (105), das mit der Hauptschleife und der ersten Fehlerstromdetektionsschaltung (102) verbunden ist,
wobei der Hilfsschwingkreis und der erste magnetische Detektionskern (107) einen RL-Mehrfachoszillationsschaltkreis bilden, wobei das bipolare Stromversorgungsmodul (105) den RL-Mehrfachoszillationsschaltkreis derart erregt, dass der RL-Mehrfachoszillationsschaltkreis eine Kopplungsmodulation für einen Fehlerstrom und einen Träger ausführt, der Tiefpassfilter ein Ausgangssignal des RL-Mehrfachoszillationsschaltkreise empfängt, ein Entkoppeln von Fehlerstrom und Träger ausführt, den Träger filtert und eine erfasste Wellenform des Fehlerstroms ausgibt, und die zweite Fehlerstromdetektionsschaltung (103) Energie direkt über den zweiten magnetischen Detektionskern (108) in einem elektromagnetischen Modus empfängt, die zweite Fehlerstromdetektionsschaltung (103) einen Fehlerstrom auf der Basis der erhaltenen Energie erfasst und ein zweites Fehlschaltungssignal ausgibt.

2. Fehlerstromschutzvorrichtung nach Anspruch 1, wobei
die Signalerfassungsschaltung (109) mit dem ersten magnetischen Detektionskern (107) verbunden ist, um eine magnetische Modulations- und Demodulationsschaltung ausbilden, die eine Allstromerfassung an der Hauptschliefe ausführt, wobei die Signalerfassungsschaltung (109) eine Erfassungswellenform ausgibt;
die Verarbeitungsschaltung (110) mit der Signalerfassungsschaltung (109) verbunden ist und die Erfassungswellenform verstärkt und rückwärts umdreht;
die Komparatorschaltung (111) ein Ausgangssignal der Verarbeitungsschaltung (110) empfängt, das Ausgangssignal der Verarbeitungsschaltung (110) beurteilt und ein erstes Fehlschaltungssignal ausgibt.

3. Fehlerstromschutzvorrichtung nach Anspruch 2, wobei das bipolare Stromversorgungsmodul (105) die Netzspannung mit einem Schaltnetzteil herabsetzt und einen positiv-negativ bipolaren Stromversorgungsausgangsstrom über eine Gegenkopplungsschaltung bildet, wobei der positiv-negativ bipolare Stromversorgungsausgangsstrom als Betriebsstromversorgung für die erste Fehlerstromdetektionsschaltung (102) fungiert;
wobei die Signalerfassungsschaltung (109), die Verarbeitungsschaltung (110) und die Komparatorschaltung (111) der ersten Fehlerstromdetektionsschaltung (102) mit dem bipolaren Stromversorgungsmodul (105) betrieben werden.

4. Fehlerstromschutzvorrichtung nach Anspruch 1, wobei
der Hilfsschwingkreis und die Tiefpassfilterschaltung jeweils mit einem Verstärker ausgestattet sind und eine Grenzfrequenz der Tiefpassfilterschaltung 2 kHz beträgt.

5. Fehlerstromschutzvorrichtung nach Anspruch 3, wobei
die Verarbeitungsschaltung (110) eine Verstärkerschaltung und eine Absolutwert-Schaltung aufweist, die die Erfassungswellenform des Fehlerstroms verstärkt und rückwärts umdreht.

6. Fehlerstromschutzvorrichtung nach Anspruch 3, wobei
die Komparatorschaltung (111) einen Verstärker aufweist, einen Signalausgang der Verarbeitungsschaltung (110) mit einem vorgegebenen Schwellenwert vergleicht und das erste Fehlschaltungssignal ausgibt.

7. Fehlerstromschutzvorrichtung nach Anspruch 1, wobei die Ansteuerschaltung (104) einen Operationsverstärker, eine Abschaltfehlerkompensationsschaltung und eine Diode aufweist, wobei ein nicht invertierender Eingang des Operationsverstärkers mit der ersten Fehlerstromdetektionsschaltung (102) verbunden ist, ein invertierender Eingang des Operationsverstärkers mit der Abschaltfehlerkompensationsschaltung verbunden ist, die zweite Fehlerstromdetektionsschaltung (103) mit einer Anode der Diode verbunden ist, eine Kathode der Diode mit einem Ausgang des Operationsverstärkers verbunden ist und als ein Ausgang der Ansteuerschaltung (104) fungiert.

8. Fehlerstromschutzvorrichtung nach Anspruch 1, wobei der Ausführungsmechanismus (106) schaltet, wenn die Ansteuerschaltung (104) ein Signal ausgibt.

## Revendications

1. Dispositif de protection contre le courant résiduel, comprenant :
un premier noyau magnétique de détection (107) s'appuyant autour d'un fil conducteur d'une boucle principale, dans lequel le premier noyau magnétique de détection (107) est un noyau magnétique de détection de courant nominal, et comprend un enroulement primaire composé de conducteurs traversés par un courant et un second enroulement ;
un second noyau magnétique de détection (108) s'appuyant autour du fil conducteur de la boucle principale, dans lequel le second noyau magnétique de détection (108) est un transformateur de courant électromagnétique, et comprend un enroulement primaire et un second enroulement ;
un premier circuit de détection de courant de défaut (102) couplé au premier noyau magnétique de détection (107) et comprenant :
un circuit d'échantillonnage de signal (109) couplé au second enroulement du premier noyau magnétique de détection (107) et comprenant un circuit auxiliaire d'oscillation et un circuit de filtrage passe-bas,
un circuit de traitement (110) et
un circuit de comparaison (111),
dans lequel le premier circuit de détection de courant de défaut (102) dépend d'une tension de grille, le premier circuit de détection de courant de défaut (102) réalise un échantillonnage du courant nominal sur la boucle principale, de manière à détecter un courant de défaut alternatif (AC) haute fréquence résiduel, un courant continu (DC) pulsatoire direct résiduel et un courant résiduel continu lissé direct (DC) ;
un second circuit de détection de courant de défaut (103) couplé au second enroulement du second noyau magnétique de détection (108), dans lequel le second circuit de détection de courant de défaut (103) est indépendant de la tension de grille, le second circuit de détection de courant de défaut (103) réalise un échantillonnage du courant électromagnétique sur la boucle principale, de manière à détecter un courant résiduel de défaut alternatif (AC) fréquence de réseau, et un courant résiduel continu (DC) pulsatoire direct ;
un circuit de commande (104), dans lequel une entrée du circuit de commande (104) est relié au premier circuit de détection de courant de défaut (102) et au second circuit de détection de courant de défaut (103), et une sortie du circuit de commande (104) est reliée à un mécanisme d'exécution (106) pour déclencher le mécanisme d'exécution (106) et l'actionner ; et
un module d'alimentation bipolaire (105) relié à la boucle principale et au premier circuit de détection de courant de défaut (102),
dans lequel le circuit auxiliaire d'oscillation et le premier noyau magnétique de détection (107) forment un circuit multivibrateur RL, le module d'alimentation bipolaire (105) excite le circuit multivibrateur RL, de sorte que le circuit multivibrateur RL réalise une modulation de couplage pour un courant résiduel et un courant porteur, le circuit de filtrage passe-bas reçoit une sortie du circuit multivibrateur RL, réalise un découplage pour le courant résiduel et le courant porteur, filtre le courant porteur et produit une forme d'onde échantillonnée du courant résiduel, et
le second circuit de détection de courant de défaut (103) obtient directement de l'énergie par l'intermédiaire du second noyau magnétique de détection (108) dans un mode électromagnétique, le second circuit de détection de courant de défaut (103) discrimine un courant résiduel basé sur l'énergie obtenue, et produit un second signal de circuit de défaut.

2. Dispositif de protection contre le courant résiduel selon la revendication 1, dans lequel
le circuit d'échantillonnage de signal (109) est couplé au premier noyau magnétique de détection (107) pour former un circuit de modulation et de démodulation magnétique qui réalise un échantillonnage du courant nominal sur la boucle principale, et le circuit d'échantillonnage de signal (109) produit une ondulation d'échantillonnage ;
le circuit de traitement (110) est relié au circuit d'échantillonnage de signal (109), et amplifie et inverse l'ondulation d'échantillonnage ;
le circuit de comparaison (111) reçoit une sortie du circuit de traitement (110), discrimine la sortie du circuit de traitement (110) et émet un premier signal de défaut de circuit.

3. Dispositif de protection contre le courant résiduel selon la revendication 2, dans lequel le module d'alimentation bipolaire (105) diminue la tension de grille avec une alimentation à découpage, et forme une sortie d'alimentation bipolaire positive-négative par l'intermédiaire d'un circuit d'équilibrage à auto-réaction, et la sortie d'alimentation bipolaire positive-négative fonctionne comme une alimentation de service du premier circuit de détection de courant de défaut (102) ;
le circuit d'échantillonnage de signal (109), le circuit de traitement (110) et le circuit de comparaison (111) du premier circuit de détection de courant de défaut (102) sont commandés par le module d'alimentation bipolaire (105).

4. Dispositif de protection contre le courant résiduel selon la revendication 1, dans lequel
le circuit auxiliaire d'oscillation et le circuit de filtrage passe-bas sont équipés respectivement d'un amplificateur, et une fréquence de coupure du circuit de filtrage passe-bas est de 2 kHz.

5. Dispositif de protection contre le courant résiduel selon la revendication 3, dans lequel
le circuit de traitement (110) comprend un circuit d'amplification et un circuit de valeur absolue, qui amplifient et inversent l'ondulation d'échantillonnage du courant résiduel.

6. Dispositif de protection contre le courant résiduel selon la revendication 3, dans lequel
le circuit de comparaison (111) comprend un amplificateur, compare une sortie de signal par le circuit de comparaison (110) avec un seuil prédéterminé, et émet le premier signal de défaut de circuit.

7. Dispositif de protection contre le courant résiduel selon la revendication 1, dans lequel le circuit de commande (104) comprend un amplificateur opérationnel, un circuit de compensation d'erreur de mise hors tension et une diode, une entrée positive de l'amplificateur opérationnel est reliée au premier circuit de détection de courant de défaut (102), une entrée négative de l'amplificateur opérationnel est reliée au circuit de compensation d'erreur de mise hors tension, le second circuit de détection de courant de défaut (103) est relié à une extrémité positive de la diode, une extrémité négative de la diode est reliée à une sortie de l'amplificateur opérationnel, et agit comme sortie du circuit de commande (104).

8. Dispositif de protection contre le courant résiduel selon la revendication 1, dans lequel le mécanisme d'exécution (106) fonctionne lorsque le circuit de commande (104) émet un signal.
